**Europäisches Patentamt**

**European Patent Office**

**Office européen des brevets**

(11) Veröffentlichungsnummer : **0 137 898**
**B1**

# (12) EUROPÄISCHE PATENTSCHRIFT

(45) Veröffentlichungstag der Patentschrift :
08.07.87

(51) Int. Cl.⁴ : **B 23 B 51/02**

(21) Anmeldenummer : 84104670.9

(22) Anmeldetag : 26.04.84

(54) **Vollhartmetallspiralbohrer zur Bearbeitung schwer zerspanbarer Werkstoffe.**

(30) Priorität : 04.10.83 DE 8328538 U

(43) Veröffentlichungstag der Anmeldung :
24.04.85 Patentblatt 85/17

(45) Bekanntmachung des Hinweises auf die Patenterteilung : 08.07.87 Patentblatt 87/28

(84) Benannte Vertragsstaaten :
AT BE CH DE FR GB IT LI NL SE

(56) Entgegenhaltungen :
EP-A- 0 088 037
DE-A- 3 020 948
DE-U- 8 328 538
US-A- 3 592 555
MACHINES AND TOOLING, Band XLIV, Nr. 1, 1974,
Melton Mowbray; V.P. ZHLUDOV et al. "Cementedcarbide drills for drilling glass-fabric laminate", Seiten 41,42
WERKSTATT UND BETRIEB, Band 116, Nr. 5, Mai
1983, München; E. ANSCHÜTZ "Vollhartmetall-Spiralbohrer mit zwei Spitzen", Seiten 253,254

(73) Patentinhaber : **Rolf Klenk Hartmetallwerkzeugfabrik
GmbH & Co. KG
Mühlstrasse 17
D-7959 Balzheim (DE)**

(72) Erfinder : **Borchert, Wolfgang
Pfarrstrasse 13b
D-7905 Dietenham (DE)**

(74) Vertreter : **Fay, Hermann, Dipl.-Phys. Dr.
Ensingerstrasse 21 Postfach 1767
D-7900 Ulm (Donau) (DE)**

## Beschreibung

Die Erfindung betrifft einen Vollhartmetallspiralbohrer zur Bearbeitung schwer zerspanbarer Werkstoffe, dessen Bohrkopf mindestens zwei Hauptschneiden mit je einer Innenschneide und einer Außenschneide aufweist.

Vollhartmetallspiralbohrer mit jeweils aus Innenschneide und Außenschneide bestehenden Hauptschneiden sind beispielsweise aus Werkstatt und Betrieb Band 116, Nr. 5, Mai 1983, München ; E. Anschütz « Vollhartmetall-Spiralbohrer mit zwei Spitzen », Seiten 253, 254, oder aus DE-U-77 10 873.7 bekannt. Bei ihnen verläuft die Außenschneide jeweils stumpfwinklig zur Mittelachse des Bohrkopfs und die Außenschneide und die Innenschneide laufen jeweils in axialen Schneidenspitzen zusammen, die alle in gleichen radialen Abständen von der Mittelachse und in axialer Richtung auf gleicher Höhe angeordnet sind.

Der Erfindung liegt die Aufgabe zugrunde, bei einem Bohrer eingangs genannter Art den Bohrkopf so auszubilden, daß der Bohrer besonders zur Bearbeitung schwer zerspanbarer Werkstoffe geeignet ist und dabei erhöhte Standzeit- und Schnittwerte zeigt.

Bei der gattungsgemäßen Vorrichtung wird diese Aufgabe nach der Erfindung dadurch gelöst, daß die Innenschneiden gemeinsam eine Bohrkopfspitze mit einem Spitzenwinkel ($\alpha$) zwischen 110° bis 135° und einem Durchmesser (d) der Spitzenbasis zwischen $0,3 \times D$ und $0,6 \times D$ bilden, wobei D der Bohrerdurchmesser ist, daß die Spitzenbasis in einer zur Bohrerachse senkrechten Ebene liegt und die Innenschneiden in einem in der Spitzenbasisebene liegenden Knick in die Außenschneiden übergehen, die einen Winkel ($\beta$) von bis zu ± 10° mit der Spitzenbasisebene bilden, und daß die Außenschneiden außen durch eine den Bohrerdurchmesser D verringernde Fase angeschnitten sind, die mit der Bohrerachse einen Anschnittwinkel ($\gamma$) zwischen 8° bis 18° bildet und eine in der Verlängerung der Außenschneide gemessene Anschnittbreite (b) zwischen 0,1 mm bis 0,6 mm aufweist.

Bei dem erfindungsgemäßen Bohrer gewährleistet die von den Innenschneiden gemeinsam gebildete Spitze ähnlich wie bei üblichen Vollhartmetallspiralbohrern ein exaktes Zentrieren. Der Knick zwischen Innenschneide und Außenschneide jeder Hauptschneide bewirkt eine Aufteilung des Spanes bei der Bearbeitung. Durch den verbesserten Spänefluß am Ort der Spanbildung in Verbindung mit den im Anspruch genannten Maßangaben ergibt sich eine erhöhte Schneidenkantenstabilität, die sich in erhöhten Standzeit- und Schnittwerten niederschlägt. Die Anschnittfase ergibt eine Stabilisierung der Schneidenecke und verbessert außerdem die Oberflächengüte der Bohrung.

Im Rahmen der Erfindung kann die Breite a der Innenschneidenspitze in der Spitzenquerschnitte zwischen 0,3 mm und 1,0 mm betragen. Zur Bearbeitung hochlegierter Cr-Ni-Stähle haben sich als besonders günstig folgende Werte erwiesen : Durchmesser d der Spitzenbais $0,45 \times D$, Spitzenwinkel $\alpha$ der Innenschneiden 126°, Neigungswinkel $\beta$ der Außenschneiden gegenüber der Spitzenbasisfläche 0° (d. h. die Außenschneiden verlaufen senkrecht zur Bohrerachse), Anschnittwinkel $\gamma$ = 12° und Spitzenbreite a in der Querschneide 0,5 mm. Im übrigen betragen zweckmäßig der Kerndurchmesser d1 des Bohrers zwischen $0,2 \times D$ und $0,25 \times D$, der Spiralwinkel der Drallnut (Spannut) zwischen 15° bis 30°, und die Rundschliffase an der Spannut zwischen 0,05 mm bis 1,5 mm.

Im folgenden wird die Erfindung an einem in der Zeichnung dargestellten Ausführungsbeispiel näher erläutert ; es zeigen :

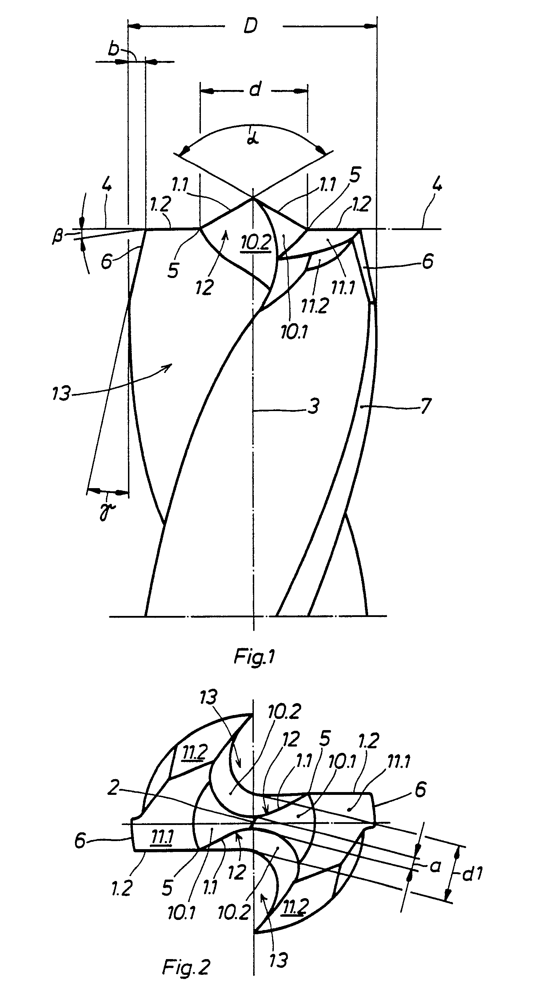

Figur 1 ein Bohrwerkzeug nach der Erfindung in Seitenansicht,

Figur 2 eine Stirnansicht des Bohrkopfes des Bohrwerkzeuges nach Fig. 1.

Der Bohrkopf des in der Zeichnung dargestellten Bohrers besitzt zwei in Umfangsrichtung um 180° gegeneinander versetzte Hauptschneiden mit je einer Innenschneide 1.1 und einer Außenschneide 1.2, wobei die Innenschneiden 1.1 im Bohrkopfzentrum durch eine Querschneide 2 verbunden sind. Die Innenschneiden 1.1 bilden gemeinsam eine Bohrkopfspitze mit einem Spitzenwinkel $\alpha$ zwischen 110° bis 135° und einem Durchmesser d der Spitzenbasis zwischen $0,3 \times D$ und $0,6 \times D$, wobei D der Bohrerdurchmesser ist. Die Spitzenbasis liegt in einer zur Bohrerachse 3 senkrechten Ebene 4. Die Innenschneiden 1.1 gehen in einem in der Spitzenbasisebene 4 liegenden Knick 5 in die Außenschneiden 1.2 über, die einen Winkel $\beta$ von bis zu ± 10° mit der Spitzenbasiseben 4 bilden können, im Ausführungsbeispiel allerdings senkrecht zur Bohrerachse 3 in der Spitzenbasisebene 4 verlaufen, so daß der Neigungswinkel $\beta$ im Ausführungsbeispiel 0° beträgt. Die Außenschneiden 1.2 sind am äußeren Ende durch eine den Bohrerdurchmesser D verringernde Fase 6 angeschnitten, die mit der Bohrerachse 3 einen Anschnittwinkel $\gamma$ zwischen 8° bis 18° gebildet und eine in der Verlängerung der Außenschneide 1.2 gemessenen Anschnittbreite b zwischen 0,1 mm bis 0,6 mm aufweist, wobei im einzelnen die Anschnittbreite b etwa proportional zum Durchmesser D des Bohrers ist. Die Breite a der Innenschneidenspitze kann zwischen 0,3 mm und 1,0 mm betragen. Das Ausführungsbeispiel zeigt den Bohrer in einer zur Bearbeitung hoch legierter Cr-Ni-Stähle besonders geeigneten Spitzengeometrie. Dabei beträgt der Durchmesser d der Spitzenbasis $0,45 \times D$, der Spitzenwinkel $\alpha$ der Innenschneiden 126°, der Anschnittwinkel $\gamma$ 12° und die Spitzenbreite a in der Querschneide 0,5 mm. Im übrigen können der Kerndurchmesser d1 des Bohrers zwischen $0,2 \times D$ und $0,25 \times D$, der Spiralwinkel der Drallnut zwischen 15° bis 30° und die Rundschliffase 7 zwischen 0,05 mm bis 1,5 mm betragen. Innen- und Außenschneiden besitzen je zwei Hinterschliffflächen 10.1, 10.2, 11.1, 11.2, von welchen die jeweils zweite Hinterschlifffläche 10.2 jeder Innenschneide 1.1 in die Spanfläche 12 der jeweils anderen Innenschneide und beide Flächen 10.2, 12 zusammen jeweils in die Spiralnut 13 des Bohrers übergehen.

## Patentansprüche

1. Vollhartmetallspiralbohrer zur Bearbeitung schwer zerspanbarer Werkstoffe, dessen Bohrkopf mindestens zwei Hauptschneiden mit je einer Innenschneide (1.1) und einer Außenschneide (1.2) aufweist, dadurch gekennzeichnet, daß die Innenschneiden (1.1) gemeinsam eine Bohrkopfspitze mit einem Spitzenwinkel ($\alpha$) zwischen 110° bis 135° und einem Durchmesser (d) der Spitzenbasis zwischen 0,3 × D und 0,6 × D bilden, wobei D der Bohrerdurchmesser ist, daß die Spitzenbasis in einer zur Bohrerachse (3) senkrechten Ebene (4) liegt und die Innenschneiden (1.1) in einem in der Spitzenbasisebene (4) liegenden Knick (5) in die Außenschneiden (1.2) übergehen, die einen Winkel ($\beta$) von bis zu ± 10° mit der Spitzenbasisebene (4) bilden, und daß die Außenschneiden (1.2) außen durch eine den Bohrerdurchmesser D verringernde Fase (6) angeschnitten sind, die mit der Bohrerachse (3) einen Anschnittwinkel ($\gamma$) zwischen 8° bis 18° bildet und eine in der Verlängerung der Außenschneide (1.2) gemessene Anschnittbreite (b) zwischen 0,1 mm bis 0,6 mm aufweist.

2. Bohrer nach Anspruch 1, dadurch gekennzeichnet, daß die Breite (a) der Innenschneidspitze in der Spitzenquerschneide (2) zwischen 0,3 mm und 1,0 mm beträgt.

3. Bohrer nach den Ansprüchen 1 und 2, dadurch gekennzeichnet, daß zur Bearbeitung hochlegierter Cr-Ni-Stähle der Durchmesser (d) der Spitzenbasis 0,45 × D, der Spitzenwinkel ($\alpha$) der Innenschneiden 126°, der Neigungswinkel ($\beta$) der Außenschneiden gegenüber der Spitzenbasisfläche 0°, der Anschnittwinkel ($\gamma$) 12° und die Spitzenbreite (a) in der Querschneide 0,5 mm beträgt.

4. Bohrer nach einem der Ansprüche 1 bis 3, dadurch gekennzeichnet, daß der Kerndurchmesser (d1) des Bohrers zwischen 0,2 × D und 0,25 × D beträgt.

5. Bohrer nach einem oder mehreren der Ansprüche 1 bis 4, dadurch gekennzeichnet, daß der Spiralwinkel der Drallnut (13) zwischen 15° bis 30° beträgt.

6. Bohrer nach einem oder mehreren der Ansprüche 1 bis 5, dadurch gekennzeichnet, daß die Rundschliffase (7) an der Spannut (13) zwischen 0,05 mm bis 1,5 mm beträgt.

## Claims

1. A solid carbide twist drill for machining materials which are difficult to cut, the drilling head thereof having at least two main cutting edges each with an inner cutting edge (1.1) and an outer cutting edge (1.2) characterised in that the inner cutting edges (1.1) together form a drill head tip with a tip angle ($\alpha$) of between 110° and 135° and a diameter (d) of the base of the tip of between 0.3 × D and 0.6 × D, wherein D is the drill diameter, that the base of the tip is disposed in a plane (4) perpendicular to the drill axis (3) and the inner cutting edges (1.1) join the outer cutting edges (1.2) at a kink (5) which is disposed in the plane (4) of the base of the tip, the outer cutting edges forming an angle ($\beta$) of up to ± 10° to the plane (4) of the base of the tip, and that the outer cutting edges (1.2) are cut away at the outside by a chamfer (6) which reduces the drill diameter (D) and which forms a lead angle ($\gamma$) of between 8° and 18° to the drill axis (3) and which has a lead width (b) of between 0.1 mm and 0.6 mm, as measured on a line extending the outer cutting edge (1.2).

2. A drill according to claim 1 characterised in that the width (a) of the inner cutting edge tip in the transverse cutting edge (2) at the tip is between 0.3 mm and 1.0 mm.

3. A drill according to claims 1 and 2 characterised in that for machining high-alloy Cr-Ni-steels the diameter (d) of the base of the tip is 0.45 × D, the tip angle ($\alpha$) of the inner cutting edges is 126°, the angle of inclination ($\beta$) of the outer cutting edges with respect to the plane of the base of the tip is 0°, the lead angle ($\gamma$) is 12° and the tip width (a) in the transverse cutting edge is 0.5 mm.

4. A drill according to one of claims 1 to 3 characterised in that the core diameter (d1) of the drill is between 0.2 × D and 0.25 × D.

5. A drill according to one or more of claims 1 to 4 characterised in that the spiral angle of the flute (13) is between 15° and 30°.

6. A drill according to one or more of claims 1 to 5 characterised in that the cylindrical grinding chamfer (7) at the flute (13) is between 0.05 mm and 1.5 mm.

## Revendications

1. Foret hélicoïdal en métal dur massif pour l'usinage de matériaux difficilement usinables dont la tête de coupe présente au moins deux arêtes coupantes comportant chacune un tranchant intérieur (1.1) et un tranchant extérieur (1.2), caractérisé par le fait que les tranchants intérieurs (1.1) forment ensemble une pointe de tête de coupe avec un angle au sommet ($\alpha$) compris entre 110° et 135° et avec un diamètre (d) de la base de la pointe entre 0,3 × D et 0,6 × D, D étant le diamètre du foret, que la base de la pointe se situe sur un plan perpendiculaire à l'axe (3) du foret, que les tranchants intérieurs (1.1) se raccordent, dans un coude (5) sur le plan de la base de la pointe (4), aux tranchants extérieurs (1.2) qui forment avec le plan de la base de la pointe (4) un angle (β) allant jusqu'à ± 10°, et que les tranchants extérieurs (1.2) sont entamés à l'extérieur par une face de dépouille (6) qui réduit le diamètre (D) du foret, forme avec l'axe (3) du foret un angle d'attaque (γ) compris entre 8° et 18° et présente, mesurée dans le prolongement du tranchant extérieur (1.2), une largeur d'attaque (b) de 0,1 mm à 0,6 mm.

2. Foret selon la revendication 1, caractérisé par le fait que la largeur (a) de la pointe des tranchants intérieurs sur l'arête transversale (2) de la pointe est comprise entre 0,3 mm et 1,0 mm.

3. Foret selon l'une des revendications 1 ou 2, caractérisé par le fait qu'il présente, pour l'usinage d'aciers au nickel-chrome fortement alliés, un diamètre (d) de la base de la pointe de 0,45 × D, un angle au sommet (α) des tranchants intérieurs (1.1) de 126°, un angle d'inclinaison (β)

dea tranchants extérieurs par rapport à la base de la pointe de 0°, un angle d'attaque (γ) de 12° et une largeur (a) de la pointe sur l'arête transversale de 0,5 mm.

4. Foret selon l'une quelconque des revendications 1 à 3, caractérisé par le fait que le diamètre du noyau (d1) du foret est compris entre 0,2 × D et 0,25 × D.

5. Foret selon l'une quelconque des revendications 1 à 4, caractérisé par le fait que l'angle d'hélice de la rainure hélicoïdale (13) est compris entre 15° et 30°.

6. Foret selon l'une quelconque des revendications 1 à 5, caractérisé par le fait que le chanfrein de surface cylindrique (7) sur la goujure du foret (13) est compris entre 0,05 mm et 1,5 mm.

Fig.1

Fig.2